# EUROPÄISCHE PATENTSCHRIFT

(11) **EP 2 411 238 B1**
(45) Veröffentlichungstag und Bekanntmachung des Hinweises auf die Patenterteilung: **01.05.2013**
(21) Anmeldenummer: 10710151.1
(22) Anmeldetag: 04.03.2010
(51) Int. Cl.: B60K 15/077

(54) **FAHRZEUGTANK**
VEHICLE TANK
RÉSERVOIR DE VÉHICULE

(30) Priorität: 23.03.2009 AT 4562009
(43) Veröffentlichungstag der Anmeldung: 01.02.2012
(73) Patentinhaber: Alutech Gesellschaft m.b.H., 5651 Lend (AT)
(72) Erfinder: SENDLHOFER, Gernot, A-5602 Wagrain (AT); LIND, Christoph, A-8200 Gleisdorf (AT)
(74) Vertreter: Weiser, Andreas
(86) Internationale Anmeldenummer: PCT/AT2010/000062
(87) Internationale Veröffentlichungsnummer: WO 2010/108199

(56) Entgegenhaltungen:
- EP-A2- 1 995 104
- WO-A1-2008/105725
- FR-A1- 2 795 776

## Beschreibung

Die vorliegende Erfindung betrifft einen Fahrzeugtank für flüssige Betriebsmittel, mit zumindest zwei durch eine Schwallwand getrennten Kammern, wobei eine Kammer eine Entnahmeleitung und die Schwallwand eine bodennahe, die beiden Kammern verbindende und durch ein Ventil öffen- und schließbare Öffnung aufweist.

Bei bekannten Fahrzeugtanks dieser Art ist das Ventil ein Rückschlagventil, welches zu der mit der Entnahmeleitung versehenen Kammer einen Zufluß, aber keinen Abfluß daraus gestattet. Damit kann beim Anfahren, Bremsen, Bergauf- oder Bergabfahren selbst bei geringer Tankfüllung stets ein für die Entnahme ausreichender Füllstand in der Entnahmeleitungskammer sichergestellt werden. Das Rückschlagventil kann auch dazu verwendet werden, zur Kosteneinsparung bei der Erstauslieferung des Fahrzeugs nur die Entnahmeleitungskammer zu befüllen ("First-fill").

Aus der gattungsbildenden WO 2008/105725 A1 ist eine Rückschlagventillösung bekannt, bei welcher das in die Schwallwandöffnung eingebaute Ventil aus einem Rückschlagventilteil und einem diesen in Serie vorgeschalteten Schwimmerventilteil besteht. Der Auftriebskörper des Schwimmerventils liegt auf der entnahmeleitungsabgewandten Seite der Schwallwand. Der Schwimmerventilteil dient lediglich dazu, das Ansaugen von Luft bei geöffnetem Rückschlagventilteil zu verhindern, indem das Schwimmerventil dann schließt. Das Ventil ist daher nur dann geöffnet, wenn das Rückschlagventil in herkömmlicher Art und Weise geöffnet hat und das Schwimmerventil noch nicht trockengefallen ist.

Die bekannten First-fill- bzw. Bergauf/Bergabfahr-Lösungen haben den Nachteil, daß aufgrund ihrer Rückschlagventilfunktion eine korrekte Füllstandsmessung mit einem einzigen Füllstandssensor in der Entnahmeleitungskammer nicht möglich ist. Der Einsatz eines einzigen Füllstandssensors wäre jedoch sehr vorteilhaft, da dieser gemeinsam mit der Entnahmeleitung in ein einziges, in den Tank einsetzbares Entnahmemodul integriert werden könnte.

Die Erfindung setzt sich zum Ziel, einen Fahrzeugtank mit der genannten Bergauf/Bergab- und First-fill-Funktionalität zu schaffen, welcher eine verbesserte Füllstandsmessung ermöglicht. Dieses Ziel wird mit einem Fahrzeugtank der einleitend genannten Art erreicht, der sich gemäß der Erfindung dadurch auszeichnet, daß das Ventil unabhängig von einer Druck- und/oder Füllstandsdifferenz der Kammern öffnet, sobald sich Betriebsmittel auf der entnahmeleitungsabgewandten Seite des Ventils befindet.

Dadurch wird anstelle eines Rückschlagventils, das auf Druck- und/oder Füllstandsdifferenzen reagiert, eine Ventilfunktionalität vorgesehen, die ausschließlich auf den Füllstand in jener Kammer reagiert, in der sich keine Entnahmeleitung befindet. Zum einen können damit in überraschend einfacher Art und Weise alle vorgenannten Bergauf/Bergabfahr- und First-fill-Funktionen erreicht werden; zum anderen kann damit in mehr Betriebsfällen als mit den vorbekannten Lösungen ein freies Kommunizieren der Kammern und damit eine korrekte Füllstandsanzeige erreicht werden.

In einer ersten bevorzugten Ausführungsform der Erfindung ist das Ventil durch einen Auftriebskörper gesteuert, welcher auf der entnahmeleitungsabgewandten Seite der Schwallwand liegt. Dadurch lassen sich alle Arten von bekannten Schwimmerventilen für den erfindungsgemäßen Fahrzeugtank einsetzen.

Bevorzugt ruht in der Schließstellung des Ventils der Auftriebskörper am Boden der entnahmeleitungslosen Kammer neben der Schwallwand auf, wodurch die Gefahr einer fehlerhaften Füllstandsmessung auf den Fall einer vollständigen Entleerung der entnahmeleitungslosen Kammer eingeschränkt ist.

Das genannte auftriebsgesteuerte Ventil hat bevorzugt einen Ventilteller, der über einen Hebeltrieb vom Auftriebskörper aus seinem Ventilsitz aushebbar ist. Alternativ kann das auftriebsgesteuerte Ventil einen Überströmkanal mit einem Verschlußelement haben, das vom Auftriebskörper zur Freigabe des Überstromkanals gleitverschieblich ist. Beide Varianten ermöglichen eine einfache und störungsunanfällige Konstruktion.

Eine zweite bevorzugte Ausführungsform der Erfindung zeichnet sich dadurch aus, daß das Ventil durch einen Druckkolben gesteuert ist, welcher sich auf der entnahmeleitungsabgewandten Seite der Schwallwand darbietet. Durch entsprechende Dimensionierung des Druckkolbens kann erreicht werden, daß das Ventil jedenfalls öffnet, wenn sich Betriebsmittel auf der entnahmeleitungsabgewandten Seite des Ventils befindet, und zwar unabhängig vom Gegendruck in der Entnahmeleitungskammer. Dies kann insbesondere dadurch erreicht werden, daß der Druckkolben ein zwischen den Kammern wirkender Kolben ist, dessen entnahmeleitungsabgewandte Kolbenfläche wesentlich größer ist als seine andere Kolbenfläche.

Eine besonders einfache Konstruktion ergibt sich dabei, wenn das Ventil einen Überströmkanal hat, welcher vom Druckkolben freiggebbar ist.

In jedem Fall ist es besonders günstig, wenn gemäß einem weiteren bevorzugten Merkmal der Erfindung das Ventil in eine Hülse eingebaut ist, welche in die genannte Öffnung der Schwallwand dicht einsetzbar ist, was die Montage des Fahrzeugtanks vereinfacht.

Bevorzugt kann die Schwallwand in an sich bekannter Weise mit weiteren Öffnungen versehen sein, die oberhalb des Ventils liegen, um die Kammern bei höheren Füllständen frei kommunizieren zu lassen.

Die Erfindung wird nachstehend anhand von in den beigeschlossenen Zeichnungen dargestellten Ausführungsbeispielen näher erläutert. In den Zeichnungen zeigen:
Fig. 1 einen Fahrzeugtank der Erfindung im Schnitt;
die Fig. 2a und 2b eine erste Ausführungsform des Ventils des Fahrzeugstanks von Fig. 1 im Schnitt in geschlossenem bzw. geöffnetem Zustand;
die Fig. 3 bis 8 die Funktionsweise des Fahrzeugtanks anhand verschiedener Betriebszustände; und
die Fig. 9 bis 12 verschiedene alternative Ausführungsformen des Ventils jeweils in teilweise geschnittener Perspektivansicht.

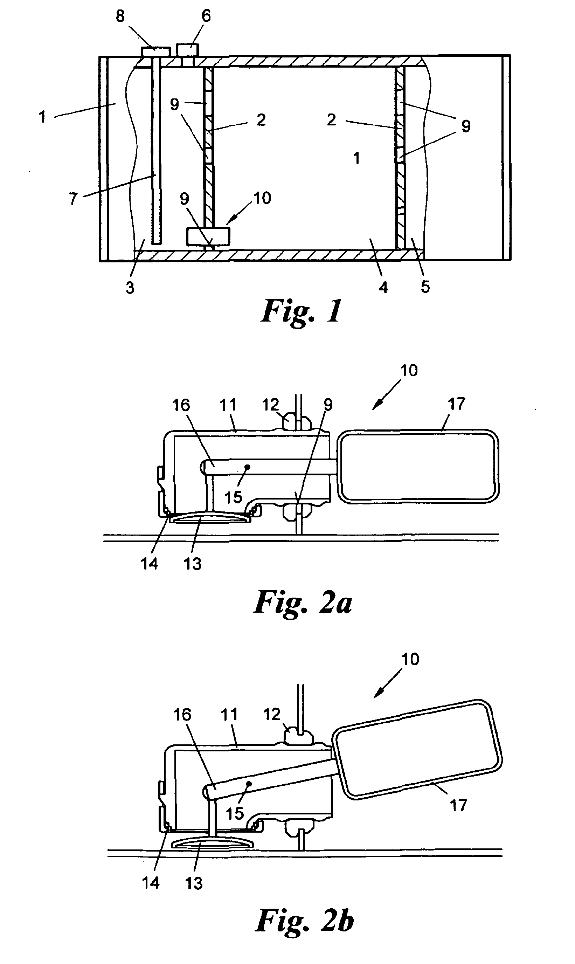

Fig. 1 zeigt einen Fahrzeugtank 1 für flüssige Betriebsmittel eines (nicht dargestellten) Fahrzeugs, z.B. für Kraftstoff, Hydrauliköl, Katalysatorflüssigkeit usw. Der Fahrzeugtank 1 ist durch zwei Schwallwände 2 in drei Kammern 3, 4 und 5 unterteilt, wobei die linke Kammer 3 mit einem Einfüllstutzen 6 und einer Entnahmeleitung 7 versehen ist. Die Entnahmeleitung 7 geht vom Boden der ersten Kammer 3 aus und ist gemeinsam mit einem (nicht dargestellten) Füllstandssensor für die Kammer 3 in ein etwa stabförmiges Entnahmemodul 8 integriert, das von oben in den Tank 1 einsetzbar ist.

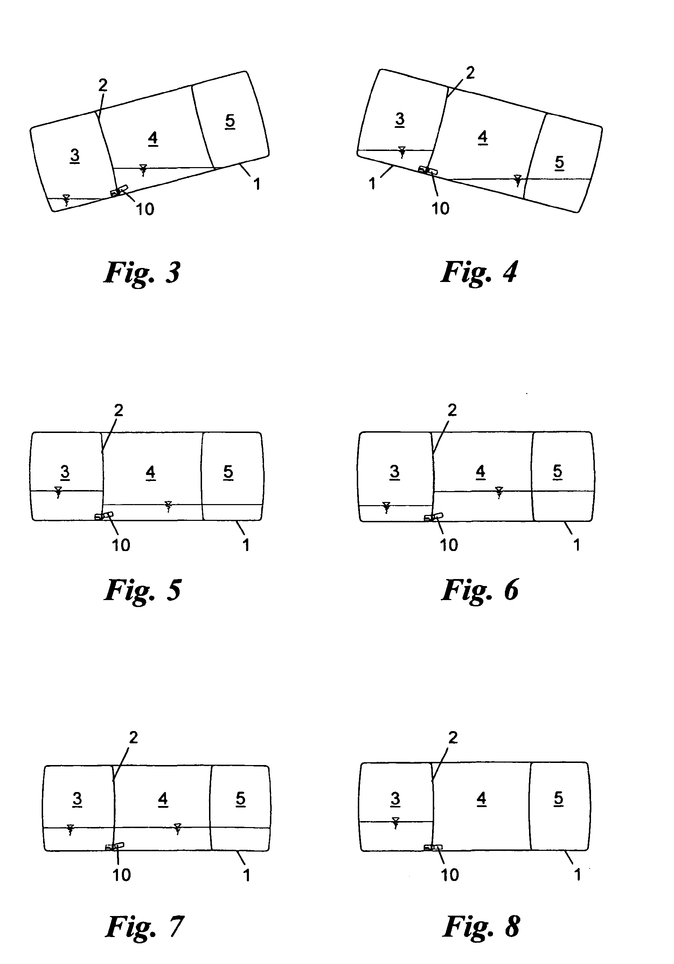

Die Schwallwände 2 sind in herkömmlicher Art und Weise jeweils mit Öffnungen 9 versehen. Die bodennächste Öffnung 9 zwischen der ersten Kammer 3 und der zweiten Kammer 4 ist mit einem Ventil 10 versehen, dessen Aufbau anhand der Fig. 2a und 2b und dessen Funktionsweise anhand der Fig. 3 bis 8 nun näher erläutert wird.

Das Ventil 10 ist in einer Hülse 11 aufgebaut, welche in die Öffnung 9 der Schwallwand 2 mittels einer Dichtung 12 dicht einsetzbar ist. In der Hülse 11 ist ein Ventilteller 13 aus einem Ventilsitz 14 aushebbar gelagert. Der Ventilteller 13 wird über einen bei 15 in der Hülse 11 angelenkten Hebel 16 von einem Auftriebskörper 17 gesteuert, der in die zweite Kammer 4 ragt. Der Auftriebskörper 17 kann beispielsweise ein Hohlkörper oder ein Kunststoffkörper aus geschlossenzelligem Schaumstoff sein.

Das Öffnen und Schließen des Ventils 10 ist damit unabhängig von der Druck- und/oder Füllstandsdifferenz zwischen den Kammern 3 und 4 und einzig vom Vorhandensein von auftriebserzeugendem flüssigem Betriebsmittel in der Kammer 4 abhängig, d.h. vom Füllstand der Kammer 4: Wenn sich Betriebsmittel auf der der Entnahmeleitung 7 abgewandten Seite des Ventils 10 befindet, öffnet das Ventil 10, andernfalls schließt es.

Damit lassen sich die in den Fig. 3 bis 8 dargestellten Betriebszustände und Funktionen realisieren. Unter der Annahme, daß der Fahrzeugtank 1 mit der Entnahmeleitungskammer 3 dem Fahrzeugheck zugewandt eingebaut wird, zeigt Fig. 3 die Schrägstellung des Fahrzeugtanks 1 bei der Bergauffahrt. Aufgrund des in der Kammer 4 befindlichen Betriebsmittels schwimmt der Auftriebskörper 17 nach oben und öffnet das Ventil 10, sodaß Betriebsmittel in die Kammer 3 strömen kann.

Fig. 4 zeigt den Zustand der Bergabfahrt, in welcher bei geringerem Füllstand in der Kammer 4 der Auftriebskörper 17 des Ventils 10 trockenfällt und damit das Ventil 10 schließt, um noch ausreichenden Füllstand in der Kammer 3 für die Entnahme mit der Entnahmeleitung 7 sicherzustellen.

Die Fig. 5 und 6 zeigen jeweils den waagrechten Zustand nach einer Bergauffahrt bzw. einer Bergabfahrt, in welchem jeweils der Auftriebskörper 17 in der Kammer 4 aufschwimmt und das Ventil 10 öffnet, sodaß die Kammern 3 und 4 miteinander kommunizieren und ihre Füllstände ausgleichen, bis wieder ein einheitlicher Füllstand in allen drei Kammern 3, 4 und 5 des Fahrzeugtanks 1 eingenommen wird (Fig. 7). Dadurch wird gleichzeitig erreicht, daß der vom Füllstandssensor in der Kammer 3 gemessene Füllstand dem Gesamtfüllstand des Fahrzeugtanks 1 entspricht.

Besonders hervorzuheben ist, daß mit einem herkömmlichen Rückschlagventil z.B. die in Fig. 5 gezeigte Ausgleichsbewegung von der Kammer 3 in die Kammer 4 nicht möglich ist, was die Gefahr in sich birgt, daß fälschlich eine zu hohe Füllmenge des Fahrzeugtanks 1 angezeigt wird.

Fig. 8 zeigt den einzigen Fall, in dem das Ventil 10 in waagrechtem Zustand des Fahrzeugtanks 1 schließt, und zwar wenn die Kammer 4 völlig entleert ist. Diese Situation ist ausgesprochen selten, da ihr eine lange Bergauffahrt (Fig. 3) vorausgegangen sein muß, in welcher die zweite Kammer 4 vollständig in die erste Kammer 3 abgeflossen sein muß, was auch nur bei sehr geringer Restmenge im Tank auftreten kann.

Fig. 8 zeigt anderseits auch den Einsatz des Ventils 10 für die First-fill-Funktion bei der Erstauslieferung des Fahrzeugs. Aus Kosteneinsparungsgründen wird dazu ausschließlich die Kammer 3 gefüllt und das Ventil 10 bleibt geschlossen. Beim späteren Auffüllen des Tanks 1 über den Einfüllstutzen 6 öffnet das Ventil 10 durch Aufschwimmen des Auftriebskörpers 17 und ermöglicht damit wieder ein Kommunizieren der Kammern 3, 4 und 5 und eine korrekte Füllstandsanzeige.

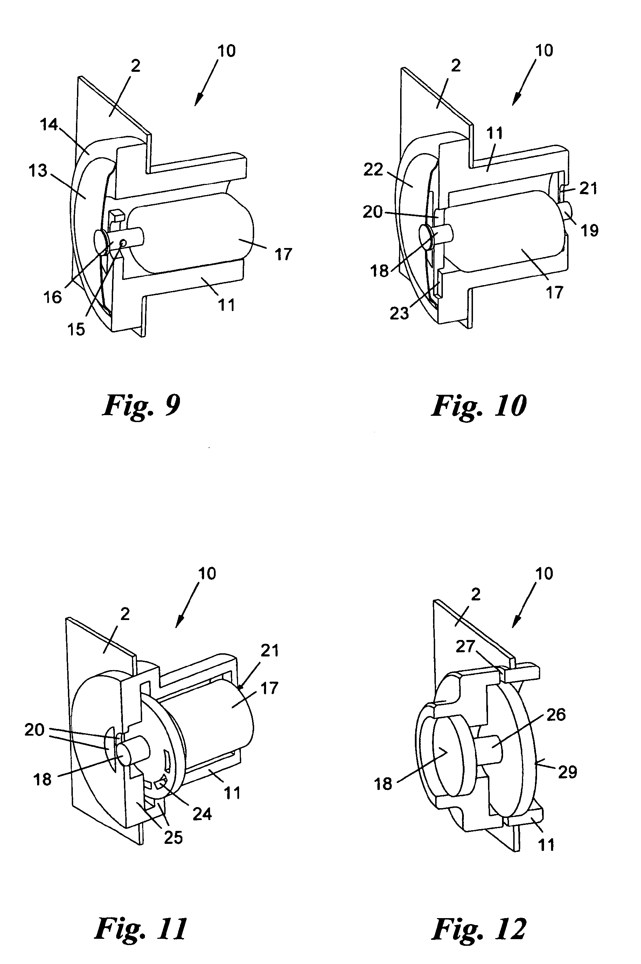

Die Fig. 9 bis 12 zeigen alternative Varianten des Ventils 10. Bei der Ausführungsform von Fig. 9 ist der Ventilteller 13 ohne Umlenkung direkt am Hebel 16 montiert und hebt sich bei einem Aufschwimmen des Auftriebskörpers 17 verkippend von seinem Ventilsitz 14 ab. Der Ventilteller 13 kann hier beispielsweise als großflächige elastische Kunststoffkappe ausgebildet sein.

In Fig. 10 ist der Auftriebskörper 17 im Inneren der Hülse 11 in Richtung nach oben und unten linear verschieblich gelagert, und zwar mit Hilfe von endseitigen Fortsätzen 18, 19, die in Führungsschlitzen 20, 21 der Hülse 11 gleiten. Der Fortsatz 18 trägt eine Dichtkappe 22, welche in der unteren Stellung des Auftriebskörpers 17 einen Überströmkanal 23 in der Hülse 11 verdeckt und in der oberen (nicht dargestellten) Stellung freigibt, um das Ventil 10 zu öffnen.

Fig. 11 zeigt eine weitere Ausführungsform mit einem nach oben und unten beweglichen Auftriebskörper 17, welcher durch die Fortsätze 18, 19 in Führungsschlitzen 20, 21 der Hülse 11 linear verschieblich gelagert ist. Der Auftriebskörper 17 ist hier mit Überströmkanälen 24 ausgestattet, welche in der angehobenen Stellung des Auftriebskörpers 17 über die Schlitze 20, 21 und das Innere der Hülse 11 eine Durchgangsverbindung schaffen, hingegen in der trockengefallenen unteren Stellung des Auftriebskörpers 17 zwischen Dichtplatten 25 der Hülse 11 eintreten und dadurch blockieren.

Fig. 12 zeigt eine andere Ausführungsform eines Ventils 10, dessen Öffnen nicht von einem Auftriebskörper, sondern von einem Druckkolben 26 gesteuert ist, der in der Hülse 11 axialverschieblich gelagert ist. Der Druckkolben 26 verdeckt in seiner nach rechts bewegten Stellung (dargestellt) einen Überströmkanal 27 in der Wand der Hülse 11 und gibt diesen in seiner nach links bewegten Stellung (nicht gezeigt) frei, um das Ventil zu öffnen.

Wie aus Fig. 12 ersichtlich, besitzt der Druckkolben 26 zwei signifikant unterschiedliche Kolbenflächen, und zwar eine der Entnahmeleitung 7 zugewandte kleine Kolbenfläche 28 und eine entnahmeleitungsabgewandte große Kolbenfläche 29. Das Verhältnis der Kolbenflächen 28 und 29 ist so gewählt, daß selbst bei einem hohen Füllstand in der Kammer 3 (siehe z.B. Fig. 5) jedweder - wenn auch nur geringe - Betriebsmittelstand in der Kammer 4 bereits ausreicht, um den Kolben 26 nach links zu bewegen; lediglich ein leerer oder fast leerer Füllstand in der Kammer 4 läßt zu, daß der Kolben 26 in seine in Fig. 12 gezeigte Verschlußstellung geht. Dadurch können ebenfalls alle in den Fig. 3 bis 8 gezeigten Funktionalitäten erreicht werden.

Die Erfindung ist nicht auf die dargestellten Ausführungsformen beschränkt, sondern umfaßt alle Varianten und Modifikationen, die in den Rahmen der angeschlossenen Ansprüche fallen. So könnte die Entnahmeleitung 7 beispielsweise auch zwischen zwei Schwallwänden 2 angeordnet werden, in welchem Fall dann beide Schwallwände mit entsprechenden Ventilen 10 versehen werden.

## Patentansprüche

1. Fahrzeugtank für flüssige Betriebsmittel, mit zumindest zwei durch eine Schwallwand (2) getrennten Kammern (3, 4), wobei eine Kammer (3) eine Entnahmeleitung (7) und die Schwallwand (2) eine bodennahe, die beiden Kammern verbindende und durch ein Ventil (10) öffen- und schließbare Öffnung (9) aufweist, **dadurch gekennzeichnet, daß** das Ventil (10) unabhängig von einer Druck- und/oder Füllstandsdifferenz der Kammern (3, 4) öffnet, sobald sich Betriebsmittel auf der entnahmeleitungsabgewandten Seite (4) des Ventils (10) befindet.

2. Fahrzeugtank nach Anspruch 1, **dadurch gekennzeichnet, daß** das Ventil (10) durch einen Auftriebskörper (17) gesteuert ist, welcher auf der entnahmeleitungsabgewandten Seite (4) der Schwallwand (2) liegt.

3. Fahrzeugtank nach Anspruch 2, **dadurch gekennzeichnet, daß** in der Schließstellung des Ventils (10) der Auftriebskörper (17) am Boden der entnahmeleitungslosen Kammer (4) neben der Schwallwand (2) aufruht.

4. Fahrzeugtank nach Anspruch 2 oder 3, **dadurch gekennzeichnet, daß** das Ventil (10) einen Ventilteller (13, 22) hat, der über einen Hebeltrieb (16) vom Auftriebskörper (17) aus seinem Ventilsitz (14) aushebbar ist.

5. Fahrzeugtank nach Anspruch 2 oder 3, **dadurch gekennzeichnet, daß** das Ventil (10) einen Überströmkanal (23; 24) mit einem Verschlußelement (23; 24, 25) hat, das vom Auftriebskörper (17) zur Freigabe des Überstromkanals (23; 24) gleitverschieblich ist.

6. Fahrzeugtank nach Anspruch 1, **dadurch gekennzeichnet, daß** das Ventil (10) durch einen Druckkolben (26) gesteuert ist, welcher sich auf der entnahmeleitungsabgewandten Seite (4) der Schwallwand (2) darbietet.

7. Fahrzeugtank nach Anspruch 6, **dadurch gekennzeichnet, daß** der Druckkolben (26) ein zwischen den Kammern (3, 4) wirkender Kolben ist, dessen entnahmeleitungsabgewandte Kolbenfläche (29) wesentlich größer ist als seine andere Kolbenfläche (28).

8. Fahrzeugtank nach Anspruch 6 oder 7, **dadurch gekennzeichnet, daß** das Ventil (10) einen Überströmkanal (27) hat, welcher vom Druckkolben (26) freigebbar ist.

9. Fahrzeugtank nach einem der Ansprüche 1 bis 8, **dadurch gekennzeichnet, daß** das Ventil (10) in eine Hülse (11) eingebaut ist, welche in die Öffnung dicht (9) einsetzbar ist.

10. Fahrzeugtank nach einem der Ansprüche 1 bis 9, **dadurch gekennzeichnet, daß** die Schwallwand (2) in an sich bekannter Weise mit weiteren Öffnungen (9) versehen ist, die oberhalb des Ventils (10) liegen.

## Claims

1. A vehicle tank for liquid operating fluid, with at least two compartments (3, 4) separated by a baffle (2), wherein one compartment (3) provides a withdrawal line (7) and the baffle (2) provides an opening (9) disposed close to the bottom and linking the two compartments, which opening can be opened and closed by a valve (10), **characterised in that** the valve (10) opens independently of a pressure and/or fill-level difference of the compartments (3, 4) when operating fluid is present on the side (4) of the valve (10) facing away from the withdrawal line.

2. A vehicle tank according to claim 1, **characterised in that** the valve (10) is controlled by a float element (17), which is disposed on the side (4) of the baffle (2) facing away from the withdrawal line.

3. A vehicle tank according to claim 2, **characterised in that**, in the closed position of the valve (10), the float element (17) rests close to the baffle (2) at the bottom of the compartment (4) without the withdrawal line.

4. The vehicle tank according to claim 2 or 3, **characterised in that** the valve (10) provides a valve plate (13, 22), which can be lifted from its valve seating (14) by the float element (17) via a lever drive (16).

5. The vehicle tank according to claim 2 or 3, **characterised in that** the valve (10) provides an overflow channel (23; 24) with a closure element (23; 24, 25), which can be displaced in a sliding manner by the float element (17) in order to release the overflow channel (23; 24).

6. The vehicle tank according to claim 1, **characterised in that** the valve (10) is controlled by a pressure piston (26), which is provided on the side (4) of the baffle (2) facing away from the withdrawal line.

7. The vehicle tank according to claim 6, **characterised in that** the pressure piston (26) is a piston acting between the compartments (3, 4), of which the piston area (29) facing away from the withdrawal line is substantially larger than its other piston area (28).

8. The vehicle tank according to claim 6 or 7, **characterised in that** the valve (10) provides an overflow channel (27), which can be released by the pressure piston (26).

9. The vehicle tank according to any one of claims 1 to 8, **characterised in that** the valve (10) is integrated in a sleeve (11), which can be inserted in a sealed manner into the opening (9).

10. The vehicle tank according to any one of claims 1 to 9, **characterised in that** the baffle (2) is provided in a per se known manner with further openings (9), which are disposed above the valve (10).

## Revendications

1. Réservoir de véhicule, dévolu à des liquides de régime et comprenant au moins deux compartiments (3, 4) séparés par une cloison de brise-flot (2), un compartiment (3) présentant un conduit de soutirage (7), et la cloison de brise-flot (2) comportant un orifice (9) proche du fond, reliant les deux compartiments et pouvant être ouvert et occulté par une soupape (10), **caractérisé par le fait que** la soupape (10) s'ouvre, indépendamment d'une différence de pression et/ou d'un niveau de remplissage des compartiments (3, 4), aussitôt que du liquide de régime se trouve du côté (4) de ladite soupape (10) qui est tourné à l'opposé du conduit de soutirage.

2. Réservoir de véhicule selon la revendication 1, **caractérisé par le fait que** la soupape (10) est commandée par un flotteur (17) situé du côté (4) de la cloison de brise-flot (2) qui est tourné à l'opposé du conduit de soutirage.

3. Réservoir de véhicule selon la revendication 2, **caractérisé par le fait que** le flotteur (17) repose sur le fond du compartiment (4) dépourvu de conduit de soutirage, dans la position fermée de la soupape (10), à côté de la cloison de brise-flot (2).

4. Réservoir de véhicule selon la revendication 2 ou 3, **caractérisé par le fait que** la soupape (10) présente un disque obturateur (13, 22) pouvant être décollé de son siège d'obturation (14) par le flotteur (17), par l'intermédiaire d'un entraînement par levier (16).

5. Réservoir de véhicule selon la revendication 2 ou 3, **caractérisé par le fait que** la soupape (10) est dotée d'un canal de trop-plein (23 ; 24) présentant un élément obturateur (23 ; 24, 25) coulissant à l'aide du flotteur (17), en vue de dégager ledit canal de trop-plein (23 ; 24).

6. Réservoir de véhicule selon la revendication 1, **caractérisé par le fait que** la soupape (10) est commandée par un piston de pression (26) se présentant du côté (4) de la cloison de brise-flot (2) qui est tourné à l'opposé du conduit de soutirage.

7. Réservoir de véhicule selon la revendication 6, **caractérisé par le fait que** le piston de pression (26) est un piston qui agit entre les compartiments (3, 4) et dont la surface (29), tournée à l'opposé du conduit de soutirage, est notablement plus grande que l'autre surface (28) dudit piston.

8. Réservoir de véhicule selon la revendication 6 ou 7, **caractérisé par le fait que** la soupape (10) est pourvue d'un canal de trop-plein (27) pouvant être dégagé par le piston de pression (26).

9. Réservoir de véhicule selon l'une des revendications 1 à 8, **caractérisé par le fait que** la soupape (10) est intégrée dans une douille (11) pouvant être insérée dans l'orifice, de manière étanche (9).

10. Réservoir de véhicule selon l'une des revendications 1 à 9, **caractérisé par le fait que** la cloison de brise-flot (2) est munie, de manière connue en soi, d'orifices supplémentaires (9) situés au-dessus de la soupape (10).
